# EUROPEAN PATENT SPECIFICATION

(11) **EP 1 456 248 B1**
(45) Date of publication and mention of the grant of the patent: **13.06.2007**
(21) Application number: 02793039.5
(22) Date of filing: 17.12.2002
(51) Int. Cl.: C08F 4/02, C08F 10/00

(54) **CATALYST SOLID COMPRISING PYROGENIC SILICA FOR OLEFIN POLYMERIZATION**
GETRÄGERTER POLYMERISATIONSKATALYSATOR ENTHALTEND AGGLOMERIERTES PYROGENES SILICIUMDIOXYD
SOLIDE CATALYTIQUE COMPRENANT DE LA SILICE PYROGENE POUR POLYMERISATION D'OLEFINES

(30) Priority: 20.12.2001 DE 10163154
(43) Date of publication of application: 15.09.2004
(73) Proprietor: Basell Polyolefine GmbH, 50389 Wesseling (DE)
(72) Inventor: FRAAIJE, Volker, 60325 Frankfurt (DE); OBERHOFF, Markus, 48317 Drensteinfurt (DE); PACZKOWSKI, Nicola, Loveland, OH 45140 (US); GREGORIUS, Heike, 56075 Koblenz (DE); KRATZER, Roland, 65719 Hofheim (DE); BIDELL, Wolfgang, B-1640 Rhode-St. Genese (BE); WULFF-DÖRING, Joachim, 67227 Frankenthal (DE)
(86) International application number: PCT/EP2002/014373
(87) International publication number: WO 2003/054027

(56) References cited:
- WO-A-97/48742
- WO-A-97/48743
- US-A- 4 225 464
- US-A- 5 776 240

## Description

The present invention relates to a catalyst solid comprising
A) support particles having a mean particle diameter d₅₀ of from 5 to 200 µm and a specific surface area of from 30 to 1 000 m²/g and obtainable by agglomeration of primary particles of a pyrogenic silica having a mean particle diameter d₅₀ of from 1 to 50 nm, and
B) at least one organic transition metal compound.

Furthermore, the invention relates to a catalyst system comprising the catalyst solid, to the use of the catalyst solid for the polymerization or copolymerization of olefins and to a process for preparing polyolefins by polymerization or copolymerization of olefins in the presence of the catalyst solid.

Organic transition metal compounds such as metallocene complexes are of great interest as catalysts for olefin polymerization because they make it possible to synthesize polyolefins which cannot be obtained using conventional Ziegler-Natta catalysts. For example, such single-site catalysts lead to polymers having a narrow molar mass distribution and uniform incorporation of comonomer(s). For these to be able to be used successfully in polymerization processes carried out in the gas phase or in suspension, it is often advantageous for the metallocenes to be used in the form of a solid, i.e. for them to be applied to a solid support. Furthermore, the supported catalysts should also have a high productivity.

Silica gels are frequently used as solid support materials for catalysts for olefin polymerization since particles which have a size and structure making them suitable as supports for olefin polymerization can be produced from these materials. However, the use of silica gels as support material has been found to be disadvantageous in some applications. In the production of film products, formation of specks caused by silica gel particles remaining in the polymer can occur. The production of fiber products is also problematical. In this case, a melt filtration is usually carried out prior to spinning. If the polymers contain excessively large amounts of particulate catalyst residues, an overpressure can build up on the sieve plate. This leads to considerable process engineering difficulties such as a reduction in the time for which the filter can be operated. Particulate catalyst residues can be measured analytically by carrying out an optical-microscopic examination of melts of the smallest sieve fraction of a screened polymer, in which the contamination is present in a visible quantity.

However, silica gels are only a subgroup of the materials designated as silicas. This collective term refers in general to compounds of the formula SiO₂ ·n H₂O which are all X-ray-amorphous. They can be obtained by various preparative methods, and the products silica gels, precipitated silicas and pyrogenic silicas differ in their fine structure and morphology. Silica gels are obtained, for example, by gelation of aqueous silica sols, which are mixtures of water glass and sulfuric acid. Milling and, if appropriate, renewed agglomeration of the primary particles in particle shaping processes such as spray drying give the final particles. Precipitated silicas are prepared from aqueous alkali metal silicate solutions by precipitation with mineral acids. This procedure forms colloidal primary particles which agglomerate as the reaction progresses and finally grow together to form aggregates. The term pyrogenic silicas refers to finely divided silicas which are produced from the gas phase at high temperatures.

Pyrogenic silicas, too, can be used as support materials for olefin polymerization catalysts.
EP-A 567 952 describes not only the use of silica gels but also the use of pyrogenic silicas for producing supported polymerization catalysts which comprise the reaction product of a supported organoaluminum compound and a metallocene.

WO 01/46273 discloses catalysts which are suitable for use in solution processes and in which catalyst compounds are activated by means of noncoordinating or weakly coordinating anions bound to the support. Support materials used here include pyrogenic silicas.

In modern polymerization processes in which heterogeneous catalysts are used, correct choice of particle size and particle size distribution of the catalyst solids is critical to technical and economic success. It is necessary for polymer powders having a narrow particle size distribution, a high bulk density and a low content of unfragmented support particles to be able to be obtained by means of the catalysts. Pyrogenic silicas are generally very finely divided or are in the form of loose agglomerates so that the polymer powders obtained in the polymerization frequently have a poor morphology, in particular with polymer powder which is too fine, and the polymer powders are difficult to handle.

EP-A 668 295 describes a process for preparing catalyst compositions in which a particulate pyrogenic silica is firstly mixed with a cocatalyst which is able to activate a metallocene catalyst and a metallocene in a solvent is then added. The resulting mixture is subsequently spray dried. However, this requires spray drying to be carried out under absolutely inert conditions using extremely sensitive substances and only comes into question when merely replacing the support materials in existing processes for producing supported olefin polymerization catalysts is not possible.

It is an object of the present invention to provide a catalyst solid which leaves no or very few troublesome particulate catalyst residues in the polymer, which can be used at a high catalyst activity in polymerization processes and by means of which simple work-up of the polymers after the polymerization is possible.

We have found that this object is achieved by a catalyst solid for olefin polymerization, comprising
A) support particles having a mean particle diameter d₅₀ of from 5 to 200 µm and a specific surface area of from 30 to 1 000 m²/g and obtainable by agglomeration of primary particles of a pyrogenic silica having a mean particle diameter d₅₀ of from 1 to 50 nm, and
B) at least one organic transition metal compound.

Furthermore, a catalyst system comprising a catalyst solid, the use of the catalyst solid for the polymerization or copolymerization of olefins and a process for preparing polyolefins by polymerization or copolymerization of olefins in the presence of the catalyst solid have been found.

The catalyst solids of the present invention are suitable for the polymerization of olefins and especially for the polymerization of α-olefins, i.e. hydrocarbons having terminal double bonds. Suitable monomers also include functionalized olefinically unsaturated compounds such as ester or amide derivatives of acrylic or methacrylic acid, for example acrylates, methacrylates or acrylonitrile. Preference is given to nonpolar olefinic compounds, including aryl-substituted α-olefins. Particularly preferred α-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene, or 1,7-octadiene or vinylaromatic compounds such as styrene or substituted styrene. Mixtures of various α-olefins can also be polymerized.

Further suitable olefins include those in which the double bond is part of a cyclic structure which may comprise one or more ring systems. Examples are cyclopentene, norbornene, tetracyclododecene and methylnorbornene and dienes such as 5-ethylidene-2-norbornene, norbornadiene or ethylnorbornadiene.

Mixtures of two or more olefins can also be polymerized.

In particular, the catalyst solids of the present invention can be used for the polymerization or copolymerization of ethylene or propylene. As comonomers in ethylene polymerization, preference is given to using C₃-C₈-α-olefins, in particular 1-butene, 1-pentene, 1-hexene and/or 1-octene. Preferred comonomers in propylene polymerization are ethylene and/or butene.

The catalyst solids of the present invention comprise support particles which are obtainable by agglomeration of primary particles of a pyrogenic silica. The most important method of preparing pyrogenic silicas is flame hydrolysis in which, usually, silicon.tetrachloride is decomposed in a hydrogen/oxygen flame. Pyrogenic silicas are commercially available and are marketed, for example, by Degussa AG under the trade name Aerosil^{®} or by Cabot Corp. under the trade name CAB-O-SIL^{®}.

The primary particles formed in the preparation of pyrogenic silicas are usually very fine. Primary particles suitable for the purposes of the present invention have a mean particle diameter d₅₀ of from 1 to 50 nm, preferably from 2 to 40 nm and in particular from 5 to 30 nm. Agglomeration of the primary particles gives the support particles present in the catalyst solid. Agglomeration is preferably carried out by spray drying a suspension of the primary particles.

The support particles used according to the present invention are preferably produced by spray drying, for example at from 50 to 700°C, a suspension of pyrogenic silica in water or another suitable suspension medium with or without addition of spray drying auxiliaries. Other customary methods of shaping, e.g. extrusion, can likewise be employed.

The support particles used according to the present invention are in the form of finely divided powder having a mean particle diameter d₅₀ of from 5 to 200 µm, preferably from 10 to 150 µm, particularly preferably from 15 to 100 µm and in particular from 20 to 70 µm. The specific surface area is from 30 to 1 000 m²/g, preferably from 50 to 500 m²/g and in particular from 100 to 400 m²/g.

The particulate, agglomerated pyrogenic silicas usually have pore volumes of from 0.1 to 10 cm³/g, preferably from 0.2 to 4 cm³/g. The pore structure of the pyrogenic silicas is preferably made up predominantly of mesopores and macropores having diameters of greater than or equal to 5 nm, with pores smaller than 5 nm making up not more than 5% of the total pore volume.

The support material used according to the present invention can additionally be heat treated and/or chemically treated using customary dessicants such as metal alkyls, chlorosilanes or SiCl₄. Appropriate treatment methods are described, for example, in WO 00/31090.

The support material can further comprise, as secondary constituents, any auxiliaries used in spray drying or residues thereof which remain after heat treatment and also components resulting from any chemical treatment.

As organic transition metal compound B), it is in principle possible to use all compounds of transition metals of groups 3 to 12 of the Periodic Table and the lanthanides which contain organic groups and preferably form catalysts active in olefin polymerization after reaction with the components C) and/or D) or D'). These are usually compounds in which at least one monodentate or polydentate ligand is bound via a sigma or pi bond to the central atom. Possible ligands include both ones containing cyclopentadienyl radicals and ones which are free of cyclopentadienyl radicals. Chem. Rev. 2000, Vol. 100, No. 4, describes many such compounds B) which are suitable for olefin polymerization. Furthermore, multinuclear cyclopentadienyl complexes are also suitable for olefin polymerization.

Suitable compounds B) are, for example, transition metal complexes with at least one ligand of the formulae F-1 to F-V, 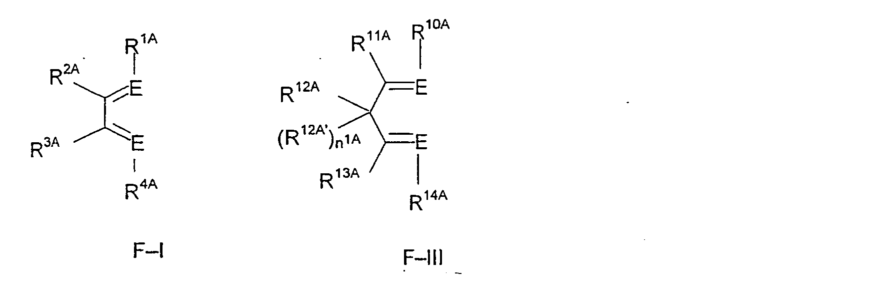 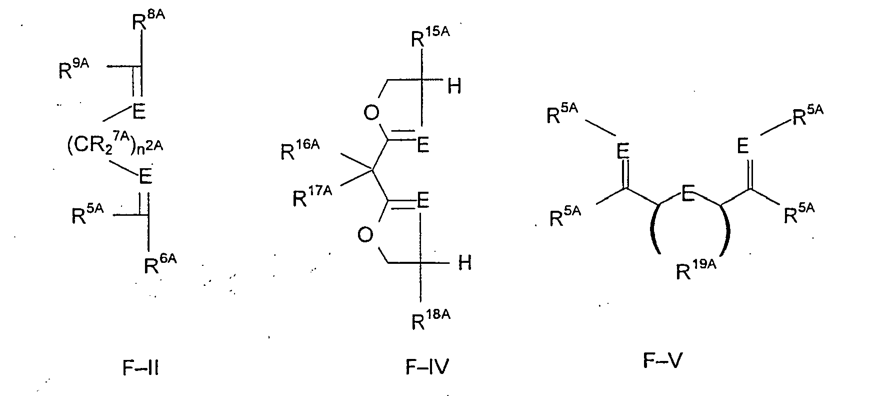 where the transition metal is selected from among the elements Ti, Zr, Hf, Sc, V, Nb, Ta, Cr, Mo, W, Fe, Co, Ni, Pd, Pt and elements of the rare earth metals. Preference is given to compounds having nickel, iron, cobalt or palladium as central metal.

E is an element of group 15 of the Periodic Table of the Elements, preferably N or P, particularly preferably N. The two or three atoms E in the molecule can be identical or different.

The radicals R^{1A} to R^{19A}, which may be identical or different within a ligand system F-I to F-V, are the following groups:
- R^{1A} and R^{4A}: are, independently of one another, hydrocarbon radicals or substituted hydrocarbon radicals, preferably hydrocarbon radicals in which the carbon atom adjacent to the element E is bound to at least two carbon atoms,
- R^{2A} and R^{3A}: are, independently of one another, hydrogen, hydrocarbon radicals or substituted hydrocarbon radicals, where R^{2A} and R^{3A} may also together form a ring system in which one or more heteroatoms may also be present,
- R^{6A} and R^{8A}: are, independently of one another, hydrocarbon radicals or substituted hydrocarbon radicals,
- R^{5A} and R^{9A}: are, independently of one another, hydrogen, hydrocarbon radicals or substituted hydrocarbon radicals,
- where R^{6A} and R^{5A} or R^{8A} and R^{9A}: may also together form a ring system,
- R^{7A}: are, independently of one another, hydrogen, hydrocarbon radicals or substituted hydrocarbon radicals, where two R^{7A} may also together form a ring system,
- R^{10A} and R^{14A}: are, independently of one another, hydrocarbon radicals or substituted hydrocarbon radicals,
- R^{11A}, R^{12A}, R^{12A'} and R^{13A}: are, independently of one another, hydrogen, hydrocarbon radicals or substituted hydrocarbon radicals, where two or more geminal or vicinal radicals R^{11A}, R^{2A}, R^{12A'} and R^{13A} may also together form a ring system,
- R^{15A} and R^{18A}: are, independently of one another, hydrogen, hydrocarbon radicals or substituted hydrocarbon radicals,
- R^{16A} and R^{17A}: are, independently of one another, hydrogen, hydrocarbon radicals or substituted hydrocarbon radicals,
- R^{19A}: is an organic radical which forms a 5- to 7-membered substituted or unsubstituted, in particular unsaturated or aromatic, heterocyclic ring system, in particular together with E a pyridine system,
- n^{1A}: is 0 or 1, where F-III is negatively charged when n^{1A} is 0, and
- n^{2A}: is an integer from 1 to 4, preferably 2 or 3.

Particularly useful transition metal complexes with ligands of the formulae F-I to F-IV are, for example, complexes of the transition metals Fe, Co, Ni, Pd or Pt with ligands of the formula F-I. Particular preference is given to diimine complexes of Ni or Pd, e.g.:
di(2,6-di-i-propylphenyl)-2,3-dimethyldiazabutadienepalladium dichloride
di(di-i-propylphenyl)-2,3-dimethyldiazabutadienenickel dichloride
di(2,6-di-i-propylphenyl)dimethyldiazabutadienedimethylpalladium
di(26-di-i-propylphenyl)-2,3-dimethyldiazabutadienedimethylnickel
di(2,6-dimethylphenyl)-2,3-dimethyldiazabutadienepalladium dichloride
di(2,6-dimethylphenyl)-2,3-dimethyldiazabutadienenickel dichloride
di(2,6-dimethylphenyl)-2,3-dimethyldiazabutadienedimethylpalladium
di(2,6-dimethylphenyl)-2,3-dimethyldiazabutadienedimethylnickel
di(2-methylphenyl)-2,3-dimethyldiazabutadienepalladium dichloride
di(2-methylphenyl)-2,3-dimethyldiazabutadienenickel dichloride
di(2-methylphenyl)-2,3-dimethyldiazabutadienedimethylpalladium
di(2-methylphenyl)-2,3-dimethyldiazabutadienedimethylnickel
diphenyl-2,3-dimethyldiazabutadienepalladium dichloride
diphenyl-2,3-dimethyldiazabutadienenickel dichloride
diphenyl-2,3-dimethyldiazabutadienedimethylpalladium
diphenyl-2,3-dimethyldiazabutadienedimethylnickel
di(2,6-dimethylphenyl)azanaphthenepalladium dichloride
di(2,6-dimethylphenyl)azanaphthenenickel dichloride
di(2,6-dimethylphenyl)azanaphthenedimethylpalladium
di(2,6-dimethylphenyl)azanaphthenedimethylnickel
1,1'-bipyridylpalladium dichloride
1,1'-bipyridylnickel dichloride
1,1'-bipyridyldimethylpalladium
1,1'-bipyridyldimethylnickel

Particularly useful compounds F-V are those which are described in J. Am. Chem. Soc. 120, p. 4049 ff. (1998), J. Chem. Soc., Chem. Commun. 1998, 849. Preferred complexes containing ligands F-V are 2,6-bis(imino)pyridyl complexes of the transition metals Fe, Co, Ni, Pd or Pt, in particular Fe.

As organic transition metal compound B), it is also possible to use iminophenoxide complexes, where the ligands are prepared, for example, from substituted or unsubstituted salicylaldehydes and primary amines, in particular substituted or unsubstituted arylamines. Transition metal complexes with pi ligands containing one or more heteroatoms in the pi system, for example the boratabenzene ligand, the pyrrolyl anion or the phospholyl anion, can also be used as organic transition metal compounds B).

Particularly well suited organic transition metal compounds B) are ones containing at least one cyclopentadienyl-type ligand, which are generally referred to as metallocene complexes. Particularly suitable metallocene complexes are those of the formula (I) 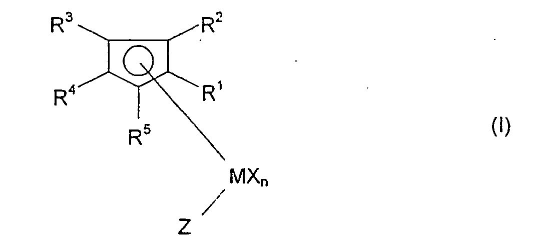 where the substituents and indices have the following meanings:
- M: is titanium, zirconium, hafnium, vanadium, niobium, tantalum, chromium, molybdenum or tungsten, or an element of group 3 of the Periodic Table and the lanthanides,
- X: is fluorine, chlorine, bromine, iodine, hydrogen, C₁-C₁₀-alkyl, C₂-C₁₀-alkenyl, C₆-C₁₅-aryl, alkylaryl having from 1 to 10 carbon atoms in the alkyl part and from 6 to 20 carbon atoms in the aryl part, =OR⁶ or -NR⁶R⁷, or two radicals X form a substituted or unsubstituted diene ligand, in particular a 1,3-diene ligand, and
- n: is 1, 2 or 3, where n has a value depending on the valence of M which is such that the metallocene complex of the formula (I) is uncharged,
where
- R⁶ and R⁷: are each C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical, and
the radicals X are identical or different and may be joined to one another,
- R¹ to R⁵: are each hydrogen, C₁-C₂₂-alkyl, 5- to 7-membered cycloalkyl or cyclo-alkenyl which may in turn bear C₁-C₁₀-alkyl groups as substituents, C₂-C₂₂-alkenyl, C₆-C₂₂-aryl, alkylaryl or arylalkyl, where two adjacent radicals may also together form a saturated or unsaturated cyclic group having from 4 to 44 carbon atoms, or Si(R⁸)₃ where
- R⁸: are identical or different and are each C₁-C₁₀-alkyl, C₃-C₁₀-cycloalkyl, C₆-C₁₅-aryl, C₁-C₄-alkoxy or C₆-C₁₀-aryloxy and
- Z: is as defined for X or is 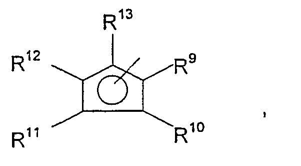
where the radicals
- R⁹ to R¹³: are each hydrogen, C₁-C₂₂-alkyl, 5- to 7-membered cycloalkyl or cycloalkenyl which may in turn bear C₁-C₁₀-alkyl groups as substituents, C₂-C₂₂-alkenyl, C₆-C₂₂-aryl, alkylaryl or arylalkyl, where two adjacent radicals may also together form a saturated or unsaturated cyclic group having from 4 to 44 carbon atoms, or Si(R¹⁴)₃ where
- R¹⁴: are identical or different and are each C₁-C₁₀-alkyl, C₃-C₁₀-cycloalkyl, C₆-C₁₅-aryl, C₁-C₄-alkoxy or C₆-C₁₀-aryloxy,
or the radicals R⁴ and Z together form an -R¹⁵-A- group, where
- R¹⁵ is: 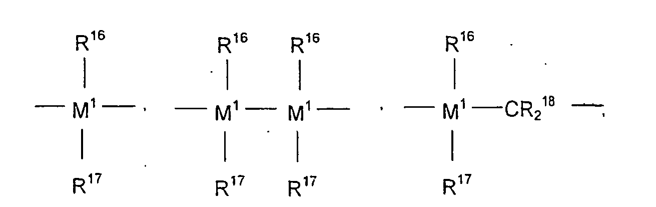 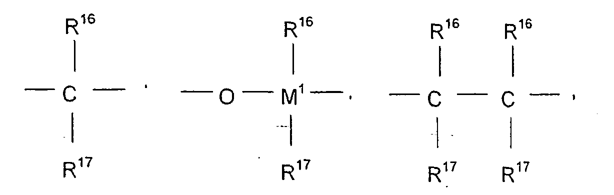 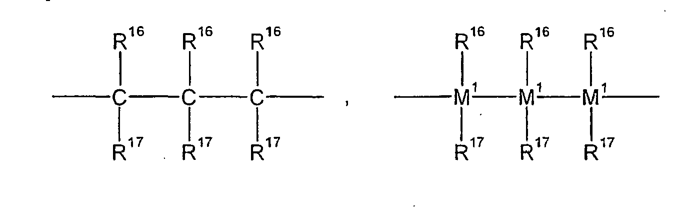 = BR¹⁶, = BNR¹⁶R¹⁷, = AlR¹⁶, -Ge-, -Sn-, -O-, -S-, = SO, = SO₂ = NR¹⁶, = CO, = PR¹⁶ or = P(O)R¹⁶,
where
- R¹⁶, R¹⁷ and R¹⁸: are identical or different and are each a hydrogen atom, a halogen atom, a trimethylsilyl group, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₇-C₁₅-alkylaryloxy group, a C₂-C₁₀-alkenyl group, a C₇-C₄₀-arylalkyl group, a C₈-C₄₀-arylalkenyl group or a C₇-C₄₀-alkylaryl group or two adjacent radicals together with the atoms connecting them form a saturated or unsaturated ring having from 4 to 15 carbon atoms, and
- M¹: is silicon, germanium or tin,
- A: is-O-, - S-, 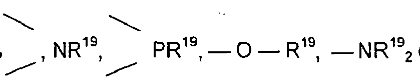 or - PR¹⁹₂, where
- R¹⁹: are each, independently of one another, C₁-C₁₀-alkyl, C₆-C₁₅-aryl, C₃-C₁₀-cycloalkyl, C₇-C₁₈-alkylaryl or Si(R²⁰)₃,
- R²⁰: is hydrogen, C₁-C₁₀-alkyl, C₆-C₁₅-aryl which may in turn bear C₁-C₄-alkyl groups as substituents or C₃-C₁₀-cycloalkyl
or the radicals R⁴ and R¹² together form an -R¹⁵- group.

The radicals X in the formula (I) are preferably identical and are preferably each fluorine, chlorine, bromine, C₁-C₇-alkyl or aralkyl, in particular chlorine, methyl or benzyl.

Among the metallocene complexes of the formula (I), preference is given to 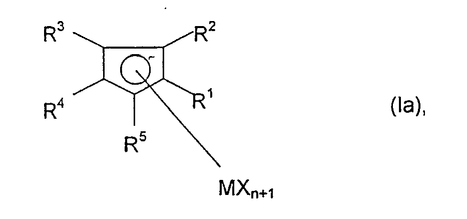 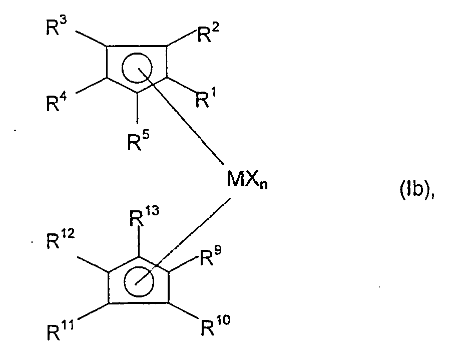 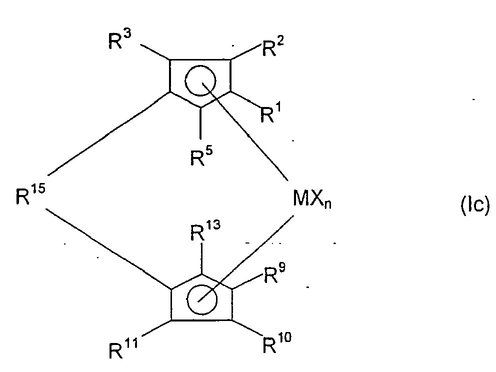 and

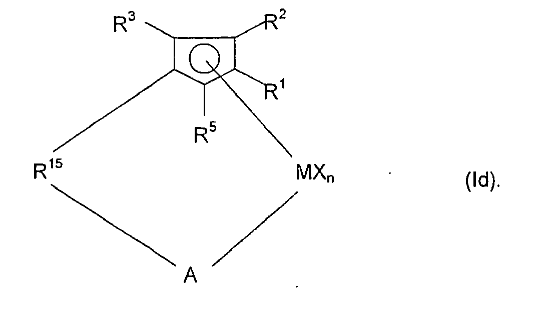

Among the compounds of the formula (1a), particular preference is given to those in which
- M: is titanium, zirconium or hafnium,
- X: is chlorine, C₁-C₄-alkyl, phenyl, alkoxy or aryloxy
- n: is 1 or 2 and
- R¹ to R⁵: are each hydrogen or C₁-C₄-alkyl.

Among the compounds of the formula (Ib), particular preference is given to those in which
- M: is titanium, zirconium or hafnium,
- X: is chlorine, C₁-C₄-alkyl or benzyl or two radicals X form a substituted or unsubstituted butadiene ligand,
- n: is 2,
- R¹ to R⁵: are each hydrogen, C₁-C₄-alkyl or Si(R⁸)₃ and
- R⁹ to R¹³: are each hydrogen, C₁-C₄-alkyl or Si(R¹⁴)₃
or two radicals R¹ to R⁵ and/or R⁹ to R¹³ together with the C₅ ring form an indenyl or substituted indenyl system.

Particularly useful compounds of the formula (lb) are ones in which the cyclopentadienyl radicals are identical.

Examples of particularly useful compounds are, inter alia:
bis(cyclopentadienyl)zirconium dichloride,
bis(pentamethylcyclopentadienyl)zirconium dichloride,
bis(methylcyclopentadienyl)zirconium dichloride,
bis(ethylcyclopentadienyl)zirconium dichloride,
bis(n-butylcyclopentadienyl)zirconium dichloride,

bis(1-n-butyl-3-methylcyclopentadienyl)zirconium dichloride,
bis(indenyl)zirconium dichloride,
bis(tetrahydroindenyl)zirconium dichloride and
bis(trimethylsilylcyclopentadienyl)zirconium dichloride
and also the corresponding dimethylzirconium compounds.

Among the compounds of the formula (Ic), particularly useful compounds are those in which
- R¹ and R⁹: are identical or different and are each hydrogen or a C₁-C₁₀-alkyl group,
- R⁵ and R¹³: are identical or different and are each hydrogen or a methyl, ethyl, isopropyl or tert-butyl group,
- R³ and R¹¹: are each C₁-C₄-alkyl and
- R² and R¹⁰: are each hydrogen
or
two adjacent radicals R² and R³ or R¹⁰ and R¹¹ together form a saturated or unsaturated cyclic group having from 4 to 44 carbon atoms,
- R¹⁵: is 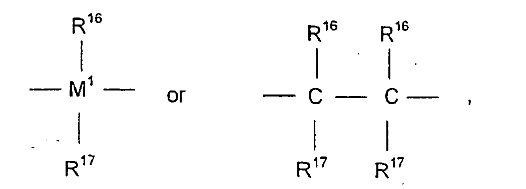 or = BR¹⁶or = BNR¹⁶R¹⁷,
M is titanium, zirconium or hafnium and
X are identical or different and are each chlorine, C₁-C₄-alkyl, benzyl, phenyl or C₇-C₁₅-alkylaryloxy.

Very particularly useful compounds of the formula (Ic) are those of the formula (Ic') 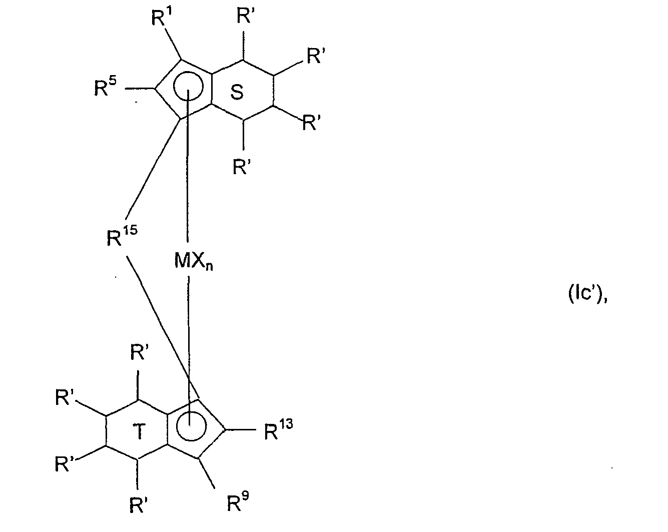 where
the radicals R' are identical or different and are each hydrogen, C₁-C₁₀-alkyl or C₃-C₁₀-cycloalkyl, preferably methyl, ethyl, isopropyl or cyclohexyl, C₆-C₂₀-aryl, preferably phenyl, naphthyl or mesityl, C₇-C₄₀-arylalkyl, C₇-C₄₀-alkylaryl, preferably 4-tert-butylphenyl or 3,5-di-tert-butylphenyl, or C₈-C₄₀-arylalkenyl,
R⁵ and R¹³ are identical or different and are each hydrogen, C₁-C₆-alkyl, preferably methyl, ethyl, isopropyl, n-propyl, n-butyl, n-hexyl or tert-butyl,
and the rings S and T are identical or different, saturated, unsaturated or partially saturated.

The indenyl or tetrahydroindenyl ligands of the metallocenes of the formula (Ic') are preferably substituted in the 2 position, 2,4 positions, 4,7 positions, 2,4,7 positions, 2,6 positions, 2,4,6 positions, 2,5,6 positions, 2,4,5,6 positions or 2,4,5,6,7 positions, in particular in the 2,4 positions, where the following nomenclature applies to the site of substitution:

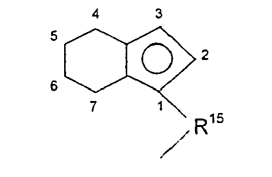

As complexes (Ic'), preference is given to using bridged bisindenyl complexes in the racemic or pseudoracemic form, where the pseudoracemic form refers to complexes in which the two indenyl ligands are in the racemic arrangement relative to one another when all other substituents of the complex are disregarded.

Examples of particularly useful complexes (Ic) and (Ic') are, inter alia:.
dimethylsilanediylbis(cyclopentadienyl)zirconium dichloride,
dimethylsilanediylbis(indenyl)zirconium dichloride,
dimethylsilanediylbis(tetrahydroindenyl)zirconium dichloride,
ethylenebis(cyclopentadienyl)zirconium dichloride,
ethylenebis(indenyl)zirconium dichloride,
ethylenebis(tetrahydroindenyl)zirconium dichloride,
tetramethylethylene-9-fluorenylcyclopentadienylzirconium dichloride,
dimethylsilanediylbis(3-tert-butyl-5-methylcyclopentadienyl)zirconium dichloride,
dimethylsilanediylbis(3-tert-butyl-5-ethylcyclopentadienyl)zirconium dichloride,
dimethylsilanediylbis(2-methylindenyl)zirconium dichloride,
dimethylsilanediylbis(2-isopropylindenyl)zirconium dichloride,
dimethylsilanediylbis(2-tert-butylindenyl)zirconium dichloride,
diethylsilanediylbis(2-methylindenyl)zirconium dibromide,
dimethylsilanediylbis(3-methyl-5-methylcyclopentadienyl)zirconium dichloride,
dimethylsilanediylbis(3-ethyl-5-isopropylcydopentadienyl)zirconium dichloride,
dimethylsilanediylbis(2-ethylindenyl)zirconium dichloride,
dimethylsilanediylbis(2-methyl-4,5-benzindenyl)zirconium dichloride
dimethylsilanediylbis(2-ethyl-4,5-benzindenyl)zirconium dichloride
methylphenylsilanediylbis(2-methyl-4,5-benzindenyl)zirconium dichloride,
methylphenylsilanediylbis(2-ethyl-4,5-benzindenyl)zirconium dichloride,
diphenylsilanediylbis(2-methyl-4,5-benzindenyl)zirconium dichloride,
diphenylsilanediylbis(2-ethyl-4,5-benzindenyl)zirconium dichloride,
diphenylsilanediylbis(2-methylindenyl)hafnium dichloride,
dimethylsilanediylbis(2-methyl-4-phenylindenyl)zirconium dichloride,
dimethylsilanediylbis(2-ethyl-4-phenylindenyl)zirconium dichloride,
dimethylsilanediylbis(2-methyl-4-(1-naphthyl)indenyl)zirconium dichloride,
dimethylsilanediylbis(2-ethyl-4-(1-naphthyl)indenyl)zirconium dichloride,
dimethylsilanediylbis(2-propyl-4-(1-naphthyl)indenyl)zirconium dichloride,
dimethylsilanediylbis(2-i-butyl-4-(1-naphthyl)indenyl)zirconium dichloride,
dimethylsilanediylbis(2-propyl-4-(9-phenanthryl)indenyl)zirconium dichloride,
dimethylsilanediylbis(2-methyl-4-isopropylindenyl)zirconium dichloride,
dimethylsilanediylbis(2,7-dimethyl-4-isopropylindenyl)zirconium dichloride,
dimethylsilanediylbis(2-methyl-4,6-diisopropylindenyl)zirconium dichloride,
dimethylsilanediylbis(2-methyl-4-[p-trifluoromethylphenyl]indenyl)zirconium dichloride,
dimethylsilanediylbis(2-methyl-4-[3',5'-dimethylphenyl]indenyl)zirconium dichloride,
dimethylsilanediylbis(2-methyl-4-[4'-tert-butylphenyl]indenyl)zirconium dichloride,
diethylsifanediylbis(2-methyl-4-[4'-tert-butylphenyl]indenyl)zirconium dichloride,
dimethylsilanediylbis(2-ethyl-4-[4'-tert-butylphenyl]indenyl)zirconium dichloride,
dimethylsifanediylbis(2-propyl-4-[4'-tert-butylphenyl]indenyl)zirconium dichloride,
dimethylsilanediylbis(2-isopropyl-4-[4'-tert-butylphenyl]indenyl)zirconium dichloride,
dimethylsilanediylbis(2-n-butyl-4-[4'-tert-butylphenyl]indenyl)zirconium dichloride,
dimethylsilanediylbis(2-hexyl-4-[4'-tert-butylphenyl]indenyl)zirconium dichloride,
dimethylsilanediyl(2-isopropyl-4-phenylindenyl)-(2-methyl-4-phenylindenyl)zirconium dichloride,
dimethylsilanediyl(2-isopropyl-4-(1-naphthyl)indenyl)-(2-methyl-4-(1-naphthyl)indenyl)zirconium dichloride,
dimethylsilanediyl(2-isopropyl-4-[4'-tert-butylphenyl]indenyl)-(2-methyl-4-[4'-tert-butylphenyl]indenyl)zirconium dichloride,
dimethylsilanediyl(2-isopropyl-4-[4'-tert-butylphenyl]indenyl)-(2-ethyl-4-[4'-tert-butylphenyl]indenyl)zirconium dichloride,
dimethylsilanediyl(2-isopropyl-4-[4'-tert-butylphenyl]indenyl)-(2-methyl-4-[3',5'-bis-tert-butylphenyl]indenyl)zirconium dichloride
dimethylsilanediyl(2-isopropyl-4-[4'-tert-butylphenyl]indenyl)-(2-methyl-4-[1'-naphthyl]indenyl)zirconium dichloride
and ethylene(2-isopropyl-4-[4'-tert-butylphenyl]indenyl)-(2-methyl-4-[4'-tert-butylphenyl]indenyl)zirconium dichloride
and also the corresponding dimethylzirconium, monochloromono(alkylaryloxy)zirconium and di(alkylaryloxy)zirconium compounds.

In the case of the compounds of the formula (id), particularly useful compounds are ones in which
- M: is titanium or zirconium, in particular titanium, and
- X: is chlorine, C₁-C₄-alkyl or phenyl or two radicals X form a substituted or unsubstituted butadiene ligand,
- R¹⁵: is 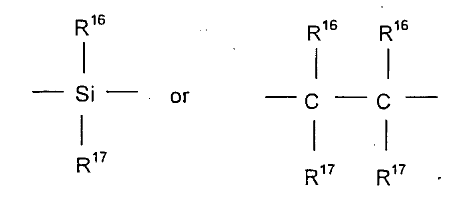 and
- A: is -O -, - S - or

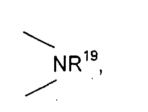

R¹ to R³ and R⁵ are each hydrogen, C₁-C₁₀-alkyl, preferably methyl, C₃-C₁₀-cycloalkyl, C₆-C₁₅-aryl or Si(R⁸)₃ or two adjacent radicals form a cyclic group having from 4 to 12 carbon atoms, with particular preference being given to all R¹ to R³ and R⁵ being methyl.

Another group of compounds of the formula (Id) which are particularly useful are those in which
- M: is titanium or chromium, preferably in the oxidation state III, and
- X: is chlorine, C₁-C₄-alkyl or phenyl or two radicals X form a substituted or unsubstituted butadiene ligand,

- R¹⁵: is 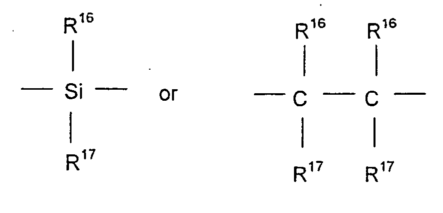 and
- A: is - O - R¹⁹, - NR¹⁹₂ or - PR¹⁹₂,
- R¹ to R³ and R⁵: are each hydrogen, C₁-C₁₀-alkyl, C₃-C₁₀-cycloalkyl, C₆-C₁₅-aryl or Si(R⁸)₃ or two adjacent radicals form a cyclic group having from 4 to 12 carbon atoms.

The synthesis of such complexes can be carried out by methods known per se, preferably by reaction of the appropriately substituted, cyclic hydrocarbon anions with halides of titanium, zirconium, hafnium, vanadium, niobium, tantalum or chromium.

Examples of appropriate preparative methods are described, for example, in Journal of Organometallic Chemistry, 369 (1989), 359-370.

Further suitable organic transition metal compounds B) are metallocenes containing at least one ligand formed by a cyclopentadienyl or heterocyclopentadienyl and a fused-on heterocycle, where, in the heterocycles, at least one carbon atom is replaced by a heteroatom, preferably by a heteroatom from group 15 or 16 of the Periodic Table and in particular by nitrogen or sulfur. Such compounds are described, for example, in WO 98/22486. They include, in particular:
dimethylsilanediyl-(2-methyl-4-phenylindenyl)(2,5-dimethyl-N-phenyl-4-azapentalene)zirconium dichloride,
dimethylsilanediylbis(2-methyl-4-phenyl-4-hydroazulenyl)zirconium dichloride,
dimethylsilanediylbis(2-ethyl-4-phenyl-4-hydroazulenyl)zirconium dichloride.

Further transition metal compounds B) which are suitable for the purposes of the present invention are substituted monocyclic pentadienyl, monoindenyl, monofluorenyl or heterocyclopentadienyl complexes of chromium, molybdenum or tungsten, where at least one of the substituents on the cyclopentadienyl ring bears a rigid donor function which is not bound exclusively via sp³-hybridized carbon or silicon atoms. The most direct linkage to the donor function contains at least one sp- or sp²-hybridized carbon atom, preferably from one to three sp²-hybridized carbon atoms. The direct linkage preferably contains an unsaturated double bond, comprises an aromatic or together with the donor forms a partially unsaturated or aromatic heterocyclic system.

In these transition metal compounds, the cyclopentadienyl ring can also be a heterocyclopentadienyl ligand, i.e. at least one carbon atom may also be replaced by a heteroatom from group 15 or 16. In this case, a carbon atom in the C₅ ring is preferably replaced by phosphorus. In particular, the cyclopentadienyl ring is substituted by further alkyl groups which may also form a five- or six-membered ring, e.g. tetrahydroindenyl, indenyl, benzindenyl or fluorenyl.

Possible donors are uncharged functional groups containing an element of group 15 or 16 of the Periodic Table, e.g. amine, imine, carboxamide, carboxylic ester, ketone (oxo), ether, thioketone, phosphine, phosphite, phosphine oxide, sulfonyl or sulfonamide groups or unsubstituted, substituted or fused, partially unsaturated heterocyclic or heteroaromatic ring systems.

Preference is given to using substituted monocyclopentadienyl, monoindenyl, monofluorenyl or heterocyclopentadienyl complexes of the formula (II) 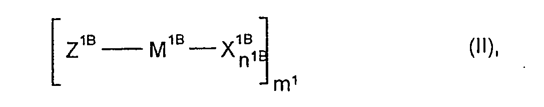 where the variables have the following meanings:
- M^{1B}: is chromium, molybdenum or tungsten,
- Z^{1B}: has the formula (IIa) 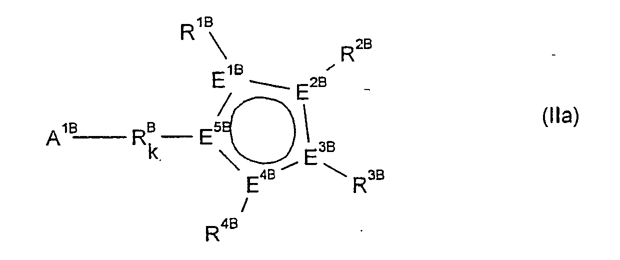
where the variables have the following meanings:
- E^{1B}- E^{5B}: are carbon or, for not more than one atom E^{1B} to E^{5B}, phosphorus or nitrogen,
- A^{1B}: is NR^{5B}R^{6B}, PR^{5B}R^{6B}, OR^{5B}, SR^{5B} or an unsubstituted, substituted or fused, partially unsaturated heterocyclic or heteroaromatic ring system,
- R^{B}: is one of the following groups: 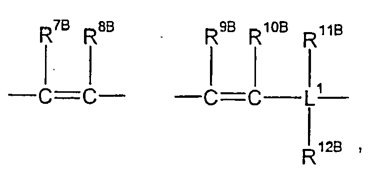 and, if A^{1B} is an unsubstituted, substituted or fused, partially unsaturated heterocyclic or heteroaromatic ring system, may also be 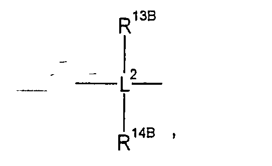
where
- L¹, L²: are each silicon or carbon,
- k: is 1 or, when A^{1B} is an unsubstituted, substituted or fused, partially unsaturated heterocyclic or heteroaromatic ring system, may also be 0,
- X^{1B}: are each, independently of one another, fluorine, chlorine, bromine, iodine, hydrogen, C₁-C₁₀-alkyl, C₂-C₁₀-alkenyl, C₆-C₂₀-aryl, alkylaryl having 1-10 carbon atoms in the alkyl part and 6-20 carbon atoms in the aryl part, NR^{15B}R^{16B}, OR^{15B}, SR^{15B}, SO₃R^{15B}, OC(O)R^{15B}, CN, SCN, β-diketonate, CO, BF₄⁻, PF₆⁻, or a bulky noncoordinating anion,
- R^{1B}- R^{16B}: are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, SiR^{17B}₃, where the organic radicals R^{1B}-R^{16B} may also be substituted by halogens and two geminal or vicinal radicals R^{1B}-R^{16B} may also be joined to form a five- or six-membered ring,
- R^{17B}: are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part and two geminal radicals R^{17B} may also be joined to form a five- or six-membered ring,
- n^{1B}: is 1, 2 or 3 and
- m^{1B}: is 1, 2 or 3.

In particular, the transition metal M^{1B} is chromium.

Z^{1B} is a substituted cyclopentadienyl system in which the radical -R^{B}ₖ-A^{1B} bears a rigid, bound donor function. The cyclopentadienyl ring is bound to the transition metal via an η⁵ bond. The donor can be coordinated or not coordinated. The donor is preferably coordinated intramolecularly to the metal center.

E^{1B} to E^{5B} are preferably four carbon atoms and one phosphorus atom or only carbon atoms; very particular preference is given to all E^{1B} to E^{5B} being carbon.

A^{1B} may, for example, together with the bridge R^{B} form an amine, ether, thioether or phosphine. However, A^{1B} may also be an unsubstituted, substituted or fused, heterocyclic aromatic ring system which can contain, apart from ring carbons, heteroatoms from the group consisting of oxygen, sulfur, nitrogen and phosphorus. Examples of 5-membered ring heteroaryl groups, which can contain, apart from carbon atoms, from one to four nitrogen atoms and/or a sulfur or oxygen atom in the ring, are 2-furyl, 2-thienyl, 2-pyrrolyl, 3-isoxazolyl, 5-isoxazolyl, 3-isothiazolyl, 5-isothiazolyl, 1-pyrazolyl, 3-pyrazolyl, 5-pyrazolyl, 2-oxazolyl, 4-oxazolyl, 5-oxazolyl, 2-thiazolyl, 4-thiazolyl, 5-thiazolyl, 2-imidazolyl, 4-imidazolyl, 5-imidazolyl, 1,2,4-oxadiazol-3-yl, 1,2,4-oxadiazol-5-yl, 1,3,4-oxadiazol-2-yl or 1,2,4-triazol-3-yl. Examples of 6-membered heteroaryl groups, which can contain from one to four nitrogen atoms and/or a phosphorus atom, are 2-pyridinyl, 2-phosphabenzolyl 3-pyridazinyl, 2-pyrimidinyl, 4-pyrimidinyl, 2-pyrazinyl, 1,3,5-triazin-2-yl and 1,2,4-triazin-3-yl, 1,2,4-triazin-5-yl or 1,2,4-triazin-6-yl. The 5-membered and 6-membered ring heteroaryl groups may also be substituted by C₁-C₁₀-alkyl, C₆-C₁₀-aryl, alkylaryl having from 1 to 10 carbon atoms in the alkyl part and 6-10 carbon atoms in the aryl part, trialkylsilyl or halogens such as fluorine, chlorine or bromine or be fused with one or more aromatics or heteroaromatics. Examples of benzo-fused 5-membered heteroaryl groups are 2-indolyl, 7-indolyl, 2-coumaronyl, 7-coumaronyl, 2-thionaphthenyl, 7-thionaphthenyl, 3-indazolyl, 7-indazolyl, 2-benzimidazolyl or 7-benzimidazolyl. Examples of benzo-fused 6-membered heteroaryl groups are 2-quinolyl, 8-quinolyl, 3-cinnolyl, 8-cinnolyl, 1-phthalazyl, 2-quinazolyl, 4-quinazolyl, 8-quinazolyl, 5-quinoxalyl, 4-acridyl, 1-phenanthridyl or 1-phenazyl. Nomenclature and numbering of the heterocycles has been taken from L. Fieser and M. Fieser, Lehrbuch der organischen Chemie, 3^{rd} revised edition, Verlag Chemie, Weinheim 1957. In a preferred embodiment, A^{1B} is an unsubstituted, substituted or fused, heteroaromatic ring system or NR^{5B}R^{6B}. Here, preference is given to simple systems which are readily available and cheap and are selected from the following group:

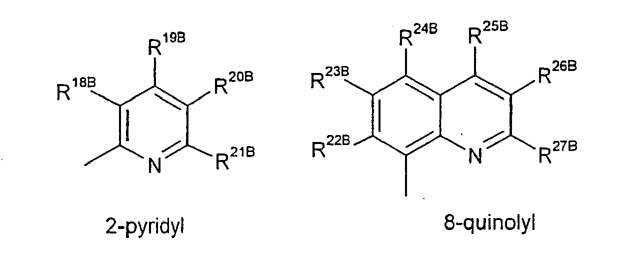

Possible substituents R^{18B} to R^{27B} are the same radicals as described for R^{1B}-R^{16B} and halogens such as fluorine, chlorine or bromine, where two vicinal radicals R^{18B} to R^{27B} may also be joined to form a 5- or 6-membered ring and the radicals may also be substituted by halogens such as fluorine, chlorine or bromine. Preferred radicals R^{18B} to R^{27B} are hydrogen, methyl, ethyl, n-propyl, n-butyl, tert-butyl, n-pentyl, n-hexyl, n-heptyl, n-octyl, vinyl, allyl, benzyl, phenyl, naphthyl, biphenyl and anthranyl, and also fluorine, chlorine and bromine. Possible organosilicon substituents are, in particular, trialkylsilyl groups having from 1 to 10 carbon atoms in the alkyl radical, especially trimethylsilyl groups. A^{1B} is very particularly preferably an unsubstituted or substituted, e.g. alkylsubstituted, quinolyl bound, in particular, via the 8 position, e.g. 8-quinolyl, 8-(2-methylquinolyl), 8-(2,3,4-trimethylquinolyl), 8-(2,3,4,5,6,7-hexamethylquinolyl. It is very simple to prepare and at the same time gives very good activities.

The rigid bridge R^{B} between the cyclopentadienyl ring and the functional group A^{1B} is an organic diradical comprising carbon and/or silicon units and having a chain length of from 1 to 3. R^{B} can be bound to A^{1B} via L¹ or via CR⁹. Owing to the ease with which they may be prepared, preference is given to the combination of R^{B} = CH=CH or 1,2-phenylene with A^{1B} = NR^{5B}R^{6B} and the combination of R^{B} = CH₂, C(CH₃)₂ or Si(CH₃)₂ with A^{1B} = unsubstituted or substituted 8-quinolyl or unsubstituted or substituted 2-pyridyl. Systems without a bridge R^{B} in which k is 0 are also particularly easy to obtain. In this case, A^{1B} is preferably unsubstituted or substituted quinolyl, in particular 8-quinolyl.

The number n^{1B} of the ligands X^{1B} depends on the oxidation state of the transition metal M^{1B}. The number n^{1B} can thus not be given in general terms. The oxidation state of the transition metals M^{1B} in catalytically active complexes is usually known to a person skilled in the art. Chromium, molybdenum and tungsten are very probably present in the oxidation state +3. However, it is also possible to use complexes whose oxidation state does not correspond to that of the active catalyst. Such complexes can then be appropriately reduced or oxidized by means of suitable activators. Preference is given to using chromium complexes in the oxidation state +3.

The transition metal complex of the formula II can be a monomeric, dimeric or trimeric compound, i.e. m¹ is 1, 2 or 3. It is possible, for example, for one or more ligands X to bridge two metal centers M^{1B}.

Examples of preferred complexes are
1-(8-quinolyl)-2-methyl-4-methylcyclopentadienylchromium(III) dichloride,
1-(8-quinolyl)-3-isopropyl-5-methylcyclopentadienylchromium(III) dichloride,
1-(8-quinolyl)-3-tert-butyl-5-methylcyclopentadienylchromium(III) dichloride,
1-(8-quinolyl)-2,3,4,5-tetramethylcyclopentadienylchromium(III) dichloride,
1-(8-quinolyl)tetrahydroindenylchromium(III) dichloride,
1-(8-quinolyl)indenylchromium(III) dichloride,
1-(8-quinolyl)-2-methylindenylchromium(III) dichloride,
1-(8-quinolyl)-2-isopropylindenylchromium(III) dichloride,
1-(8-quinolyl)-2-ethylindenylchromium(III) dichloride,
1-(8-quinolyl)-2-tert-butylindenylchromium(III) dichloride,
1 -(8-quinolyl)benzindenylchromium(III) dichloride,
1-(8-quinolyl)-2-methylbenzindenylchromium(III) dichloride,
1-(8-(2-methylquinolyl))-2-methyl-4-methylcyclopentadienylchromium(III) dichloride,
1-(8-(2-methylquinolyl))-2,3,4,5-tetramethylcyclopentadienylchromium(III) dichloride,
1-(8-(2-methylquinolyl))tetrahydroindenylchromium(III) dichloride,
1-(8-(2-methylquinolyl))indenylchromium(III) dichloride,
1-(8-(2-methylquinolyl))-2-methylindenylchromium(III) dichloride,
1-(8-(2-methylquinolyl))-2-isopropylindenylchromium(III) dichloride,
1-(8-(2-methylquinolyl))-2-ethylindenylchromium(III) dichloride,
1-(8-(2-methylquinolyl))-2-tert-butylindenylchromium(III) dichloride,
1-(8-(2-methylquinolyl))benzindenylchromium(III) dichloride or
1-(8-(2-methylquinolyl))-2-methylbenzindenylchromium(III) dichloride.

The preparation of functional cyclopentadienyl ligands has been known for a long time. Various synthetic routes to these complexing ligands are described, for example, by M. Enders et. al. in Chem. Ber. (1996), 129, 459-463 or P. Jutzi and U. Siemeling in J. Orgmet. Chem. (1995), 500, 175-185.

The metal complexes, in particular the chromium complexes, can be obtained in a simple manner by reacting the corresponding metal salts, e.g. metal chlorides, with the ligand anion (e.g. using methods analogous to those of the examples in DE-A 197 10615).

Further transition metal compounds B) which are suitable for the purposes of the present invention are imidochromium compounds of the formula (III), 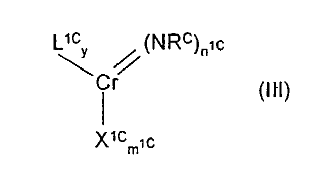 where the variables have the following meanings:
- R^{C}: is R^{1C}C=NR^{2C}, R^{1C}C=O, R^{1C}C=O (OR^{2C}), R^{1C}C=S, (R^{1C})₂P=O (OR^{1C})₂P=O, SO₂R^{1C}, R^{1C}R^{2C}C=N, NR^{1C}R^{2C} or BR^{1C}R^{2C}, C₁-C₂₀-alkyl, C₁-C₂₀-cycloalkyl, C₂-C₂₀-alkenyl, C₆-C₂₀-aryl, alkylaryl having from 1 to 10 carbon atoms in the alkyl part and 6-20 carbon atoms in the aryl part, or hydrogen if it is bound to a carbon atom, where the organic radicals R^{1C} and R^{2C} may also bear inert substituents,
- X^{1c}: are each, independently of one another, fluorine, chlorine, bromine, iodine, NR^{3C}R^{4C}, NP(R^{3C})₃, OR^{3C}, OSi(R^{3C})₃, SO₃R^{3C}, OC(O)R^{3C}, β-diketonate, BF₄⁻, PF₆⁻ or a bulky weakly coordinating or noncoordinating anion,
- R^{1C}- R^{4C}: are each, independently of one another, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, or hydrogen if it is bound to a carbon atom, where the organic radicals R^{1C} to R^{4C} may also bear inert substituents,
- n^{1C}: is 1 or 2,
- m^{1C}: is 1, 2 or 3, where m^{1C} has a value depending on the valence of Cr such that the metallocene complex of the formula (II) is uncharged,
- L^{1C}: is an uncharged donor and
- y: is from 0 to 3.

Such compounds and their preparation are described, for example, in WO 01/09148.

Further suitable organic transition metal compounds B) are transition metal complexes with a tridentate macrocyclic ligand.

In particular, compounds of the formula (IV) 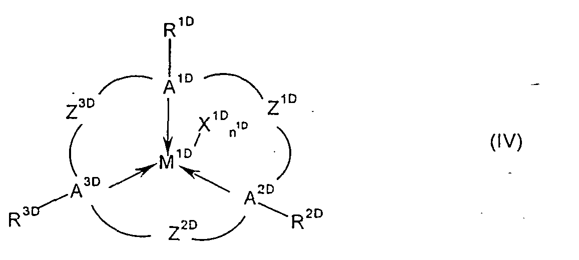 where the variables have the following meanings:
- M^{1D}: is a transition metal of groups 3-12 of the Periodic Table,
- Z^{1D} - Z^{3D}: is a diradical selected from the following group 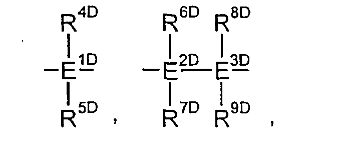
where
- E^{1D} - E^{3D}: are each silicon or carbon,
- A^{1D} - A^{3D}: are each nitrogen or phosphorus,
- R^{1D} - R^{9D}: are each hydrogen, C₁-C₂₀-alkyl, 5- to 7-membered cycloalkyl which may in turn bear a C₆-C₁₀-aryl group as substituent, C₂-C₂₀-alkenyl, C₆-C₂₀-aryl, alkylaryl having from 1 to 10 carbon atoms in the alkyl part and 6-20 carbon atoms in the aryl part, SiR^{10D}₃, where the organic radicals R^{1D}-R^{9D} may also be substituted by halogen(s) and further functional groups which preferably bear elements of groups 15 and/or 16 of the Periodic Table of the Elements and two geminal or vicinal radicals R^{1D}-R^{9D} may also be joined to form a five- or six-membered ring,
- X^{1D}: are each, independently of one another, fluorine, chlorine, bromine, iodine, hydrogen, C₁-C₁₀-alkyl, C₂-C₁₀-alkenyl, C₆-C₂₀-aryl, alkylaryl having 1-10 carbon atoms in the alkyl part and 6-20 carbon atoms in the aryl part, NR^{10D}_{2,} OR^{10D}, SR^{10D}, SO₃R^{10D}, OC(O)R^{10D}, CN, SCN, =O, β-diketonate, BF₄⁻, PF₆⁻, or a bulky noncoordinating anion,
- R^{10D}: are each, independently of one another, hydrogen, C₁-C₂₀-alkyl, 5- to 7-membered cycloalkyl which may in turn bear a C₆-C₁₀-aryl group as substituent, C₂-C₂₀-alkenyl, C₆-C₂₀-aryl, alkylaryl having from 1 to 10 carbon atoms in the alkyl part and 6-20 carbon atoms in the aryl part and two radicals R^{10D} may also be joined to form a five- or six-membered ring and
- n^{1D}: is a number from 1 to 4 such that the metallocene complex of the formula (IV) is uncharged,
are suitable as organic transition metal compounds B).

Preferred organic transition metal compounds of the formula (IV) are:
[1,3,5-tri(methyl)-1,3,5-triazacyclohexane]chromium trichloride,
[1,3,5-tri(ethyl)-1,3,5-triazacyclohexane]chromium trichloride,
[1,3,5-tri(octyl)-1,3,5-triazacyclohexane]chromium trichloride,
[1,3,5-tri(dodecyl)-1,3,5-triazacyclohexane]chromium trichloride and
[1,3,5-tri(benzyl)-1,3,5-triazacyclohexane]chromium trichloride.

It is also possible to use mixtures of various organic transition metal compounds as component B).

In addition, the catalyst solid preferably further comprises at least one cation-forming compound as component C).

Suitable cation-forming compounds C) which are able to react with the organic transition metal compound B) to convert it into a cationic compound are, for example, aluminoxanes, strong uncharged Lewis acids, ionic compounds having a Lewis-acid cation or ionic compounds having a Brönsted-acid as cation. In the case of metallocene complexes as organic transition metal compound B), the cation-forming compounds C) are frequently also referred to as compounds capable of forming metallocenium ions.

As aluminoxanes, it is possible to use, for example, the compounds described in WO 00/31090. Particularly useful compounds of this type are open-chain or cyclic aluminoxane compounds of the formula (V) or (VI) 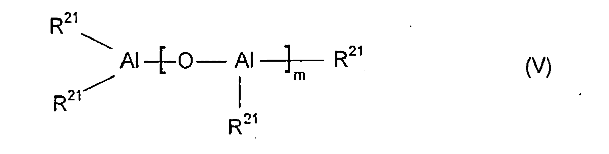 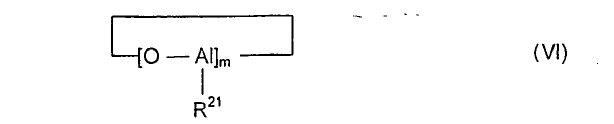
- where R²¹: is a C₁-C₄-alkyl group, preferably a methyl or ethyl group, and m is an integer from 5 to 30, preferably from 10 to 25.

These oligomeric aluminoxane compounds are usually prepared by reacting a solution of trialkylaluminum with water. The oligomeric aluminoxane compounds obtained in this way are generally in the form of mixtures of both linear and cyclic chain molecules of various lengths, so that m is to be regarded as a mean. The aluminoxane compounds can also be present in admixture with other metal alkyls, preferably aluminum alkyls.

Furthermore, in place of the aluminoxane compounds of the formula (V) or (VI), it is also possible to use, as component C), modified aluminoxanes in which the hydrocarbon radicals or hydrogen atoms have been partly replaced by alkoxy, aryloxy, siloxy or amide radicals.

It has been found to be advantageous to use the organic transition metal compound B) and the aluminoxane compounds in such amounts that the atomic ratio of aluminum from the aluminoxane compounds to the transition metal from the organic transition metal compound B) is in the range from 10:1 to 1 000:1, preferably from 20:1 to 500:1 and in particular in the range from 30:1 to 400:1.

As strong, uncharged Lewis acids, preference is given to compounds of the formula (VII)

M²X¹X²X³ (VII)

where
- M²: is an element of group 13 of the Periodic Table of the Elements, in particular B, Al or Ga, preferably B,
- X¹, X² and X³: are each hydrogen, C₁-C₁₀-alkyl, C₆-C₁₅-aryl, alkylaryl, arylalkyl, haloalkyl or haloaryl each having from 1 to 10 carbon atoms in the alkyl radical and from 6 to 20 carbon atoms in the aryl radical or fluorine, chlorine, bromine or iodine, in particular haloaryls, preferably pentafluorophenyl.

Further examples of strong, uncharged Lewis acids are mentioned in WO 00/31090.

Particular preference is given to compounds of the formula (VII) in which X¹, X² and X³ are identical, preferably tris(pentafluorophenyl)borane.

Further strong uncharged Lewis acids suitable as cation-forming compounds C) are the reaction products from the reaction of a boronic acid with two equivalents of a trialkylaluminum or the reaction products from the reaction of a trialkylaluminum with two equivalents of an acidic, fluorinated, in particular perfluorinated, carbon compound such as pentafluorophenol or bis(pentafluorophenyl)borinic acid.

Suitable ionic compounds having Lewis-acid cations are salt-like compounds of the cation of the formula (VIII)

[(Y^{a+})Q₁Q₂...Q_{z}]^{d+} (VIII)

where
- Y: is an element of groups 1 to 16 of the Periodic Table of the Elements,
- Q₁ to Q_{z}: are singly negatively charged groups such as C₁-C₂₈-alkyl, C₆-C₁₅-aryl, alkylaryl, arylalkyl, haloalkyl, haloaryl each having from 6 to 20 carbon atoms in the aryl radical and from 1 to 28 carbon atoms in the alkyl radical, C₃-C₁₀-cycloalkyl which may in turn bear C₁-C₁₀-alkyl groups as substituents, halogen, C₁-C₂₈-alkoxy, C₆-C₁₅-bryloxy, silyl or mercaptyl groups,
- a: is an integer from 1 to 6 and
- z: is an integer from 0 to 5,
- d: corresponds to the difference a - z, but d is greater than or equal to 1.

Particularly suitable cations are carbonium cations, oxonium cations and sulfonium cations and also cationic transition metal complexes. Particular mention may be made of the triphenylmethyl cation, the silver cation and the 1,1'-dimethylferrocenium cation. They preferably have noncoordinating counterions, in particular boron compounds as are mentioned in WO 91/09882, preferably tetrakis(pentafluorophenyl)borate.

Salts having noncoordinating anions can also be prepared by combining a boron or aluminum compound, e.g. an aluminum alkyl, with a second compound which can react to link two or more boron or aluminum atoms, e.g. water, and a third compound which forms an ionizing ionic compound with the boron or aluminum compound, e.g. triphenylchloromethane. In addition a fourth compound which likewise reacts with the boron or aluminum compound, e.g. pentafluorophenol, can also be added.

Ionic compounds having Brönsted acids as cations likewise preferably have noncoordinating counterions. As Brönsted acids, particular preference is given to protonated amine or aniline derivatives. Preferred cations are N,N-dimethylanilinium, N,N-dimethylcyclohexylammonium and N,N-dimethylbenzylammonium and also derivatives of the latter two.

Preferred ionic compounds C) are, in particular, N,N-dimethylanilinium tetrakis(pentafluorophenyl)borate, N,N-dimethylcyclohexylammonium tetrakis(pentafluorophenyl)borate and N,N-dimethylbenzylammonium tetrakis(pentafluorophenyl)borate.

It is also possible for two or more borate anions to be joined to one another, as in the dianion [(C₆F₅)₂B-C₆F₄-B(C₆F₅)₂]²⁻, or for the borate anion to be bound via a bridge to a suitable functional group on the support surface.

Further suitable cation-forming compounds C) are listed in WO 00/31090.

The amount of strong uncharged Lewis acids, ionic compounds having Lewis-acid cations or ionic compounds having Brönsted acids as cations is preferably from 0.1 to 20 equivalents, preferably from 1 to 10 equivalents, based on the organic transition metal compound B).

Further suitable cation-forming compounds C) are boron-aluminum compounds such as di[bis(pentafluorophenylboroxy)]methylalane. Boron-aluminum compounds of this type are disclosed, for example, in WO 99/06414.

It is also possible to use mixtures of all the abovementioned cation-forming compounds C). Preferred mixtures comprise aluminoxanes, in particular methylaluminoxane, and an ionic compound, in particular one in which the tetrakis(pentafluorophenyl)borate anion is present, and/or a strong uncharged Lewis acid, in particular tris(pentafluorophenyl)borane.

Both the organic transition metal compound B) and the cation-forming compounds C) are preferably used in a solvent. Preferred solvents are aromatic hydrocarbons having from 6 to 20 carbon atoms, in particular xylenes and toluene.

The catalyst solid can further comprise, as additional component D), a metal compound of the formula (IX),

M³ (R²²)ᵣ (R²³)ₛ (R²⁴)ₜ (IX)

where
- M³: is an alkali metal, an alkaline earth metal or a metal of group 13 of the Periodic Table, i.e. boron, aluminum, gallium, indium or thallium,
- R²²: is hydrogen, C₁-C₁₀-alkyl, C₆-C₁₅-aryl, alkylaryl or arylalkyl each having from 1 to 10 carbon atoms in the alkyl part and from 6 to 20 carbon atoms in the aryl part,
- R²³ and R²⁴: are each hydrogen, halogen, C₁-C₁₀-alkyl, C₆-C₁₅-aryl, alkylaryl, arylalkyl or alkoxy each having from 1 to 10 carbon atoms in the alkyl radical and from 6 to 20 carbon atoms in the aryl radical,
- r: is an integer from 1 to 3
and
- s and t: are integers from 0 to 2, where the sum r+s+t corresponds to the valence of M³,
where the component D) is not identical to the component C). It is also possible to use mixtures of various metal compounds of the formula (IX).

Among the metal compounds of the formula (IX), preference is given to those in which
- M³: is lithium, magnesium or aluminum and
- R²³ and R²⁴: are each C₁-C₁₀-alkyl.

Particularly preferred metal compounds of the formula (IX) are n-butyllithium, n-butyl-n-octylmagnesium, n-butyl-n-heptylmagnesium, tri-n-hexylaluminum, triisobutylaluminum, triethylaluminum and trimethylaluminum and mixtures thereof.

If a metal compound D) is used, it is preferably present in the catalyst solid in such an amount that the molar ratio of M³ from the formula (IX) to transition metal M from organic transition metal compound B) is from 800:1 to 1:1, in particular from 200:1 to 2:1.

In general, the catalyst solid is used together with a further metal compound D') of the formula (IX), where this may be different from the metal compound or compounds D) used in the preparation of the catalyst solid, as constituent of a catalyst system for the polymerization or copolymerization of olefins. It is also possible, particularly when the catalyst solid does not contain a component C), for the catalyst system to comprise one or more cation-forming compounds in addition to the catalyst solid, with these cation-forming compounds being identical to or different from any cation-forming compounds present in the catalyst solid.

In principle, the catalyst solids of the present invention are prepared by fixing at least one of the components B) or C) on the support by physisorption or by means of a chemical reaction, i.e. covalent binding of the components, with reactive groups on the support surface. The order in which support component, component B) and any component C) are combined can be chosen freely. The components B) and C) can be added independently or simultaneously. After the individual process steps, the solid can be washed with suitable inert solvents such as aliphatic or aromatic hydrocarbons.

In a preferred embodiment, the organic transition metal compound B) is brought into contact with the cation-forming compound C) in a suitable solvent, usually to give a soluble reaction product, an adduct or a mixture. The preparation obtained in this way is then brought into contact with the support particles A), which may have been pretreated, and the solvent is completely or partly removed. The catalyst solid is then preferably obtained in the form of a free-flowing powder. Examples of the industrial implementation of the above process are described in WO 96/00243, WO 98/40419 or WO 00/05277. A further preferred embodiment comprises firstly applying the cation-forming compound C) to the support particles A) and subsequently bringing this supported cation-forming compound into contact with the organic transition metal compound B).

Furthermore, it is also possible for the catalyst solid firstly to be prepolymerized with α-olefins, preferably linear C₂-C₁₀-1-alkenes and in particular ethylene or propylene, and the resulting prepolymerized catalyst solid then to be used in the actual polymerization. The mass ratio of catalyst solid used in the prepolymerization to monomer polymerized onto it is usually in the range from 1:0.1 to 1:200.

Furthermore, a small amount of an olefin, preferably an α-olefin, for example vinylcyclohexane, styrene or phenyldimethylvinylsilane, as modifying component, an antistatic or a suitable inert compound such as a wax or oil can be added as additive during or after the preparation of the supported catalyst system. The molar ratio of additives to transition metal compound B) is usually from 1:1 000 to 1 000:1, preferably from 1:5 to 20:1.

The polymerization can be carried out in a known manner in bulk, in suspension, in the gas phase or in a supercritical medium in the customary reactors used for the polymerization of olefins. It can be carried out batchwise or preferably continuously in one or more stages. Solution processes, suspension processes, stirred gas-phase processes and gas-phase fluidized-bed processes are possible. As solvents or suspension media, it is possible to use inert hydrocarbons, for example isobutane, or else the monomers themselves.

The polymerization can be carried out at from -60 to 300°C and pressures in the range from 0.5 to 3 000 bar. Preference is given to temperatures in the range from 50 to 200°C, in particular from 60 to 100°C, and pressures in the range from 5 to 100 bar, in particular from 15 to 70 bar. The mean residence times are usually from 0.5 to 5 hours, preferably from 0.5 to 3 hours. It is also possible to use molar mass regulators, for example hydrogen, or customary additives such as antistatics in the polymerization.

The catalyst solids of the present invention display a very high productivity in the polymerization of olefins, offer advantages in the work-up of the polymers after the polymerization and lead to significantly reduced problems in respect of catalyst residues in the polymer. The polymers prepared using the catalyst system of the present invention are particularly suitable for applications which require a high product purity.

### Examples

The following tests were carried out to characterize the samples:
Determination of the specific surface area:
   By nitrogen adsorption in accordance with DIN 66131
Determination of the pore volume:
   By mercury porosimetry in accordance with DIN 66133
Determination of d₁₀, d₅₀ and d₉₀:
   The particle size distribution of the particles was measured by light scattering using a Malvern 2600 Sizer from Malvern, Great Britain. In each case, 100 ml of sample material were used in air. For the present purposes, the parameters d₁₀, d₅₀ and d₉₀ are the volume-based percentiles of the diameter. d₅₀ is at the same time the median of the particle size distribution.
Determination of the loss on ignition:
   The loss on ignition is the weight loss experienced by a sample which is heated in two steps, viz. firstly for 30 minutes at 200°C in a drying oven and then for 1 hour at 950°C in a muffle furnace.
Determination of the proportion of volatile constituents:
   The proportion of volatile constituents was determined by measurement under an inert gas atmosphere using a Mettler LJ 16 Moisture Analyzer from Mettler-Toledo, Greifensee, Switzerland/Infrared dryer Mettler LJ 16 from Mettler-Toledo, Gießen, Germany.
Determination of the pressure increase during melt filtration:
   The pressure increase during melt filtration was determined by extrusion of the polypropylene in a standard laboratory extruder (3-zone screw) at 265°C through a metal filter disk with a support mesh having a mesh opening of 5 µm at a throughput of 2 kg/h. The pressure increase was recorded as a function of time for 1 hour at a constant polypropylene throughput.
Determination of the particle size distribution of the polypropylene powder:
   The particle size distribution of the polypropylene powder was determined by sieve analysis.

### Example 1

### a) Pretreatment of the support

Use was made of a pyrogenic silica which had been agglomerated to secondary particles by Degussa AG in a spray drying process using a spray drying auxiliary following the method described in DE-A-10 163 179. The primary particles had a mean particle diameter d₅₀ of 7 nm. The spray drying auxiliary was removed by calcining the material at 480°C. The intended particle size distribution was set by sieving to d₁₀/d₅₀/d₉₀ = 30/52/78 µm. The specific surface area was 380 m²/g.

To condition the support, 100 g of the material were passivated in a laboratory drying oven Vacutherm from Heraeus for 30 hours at 180°C under a dynamic vacuum of a diaphragm vacuum pump from Vacuubrand, Wertheim, Germany. The substance was transferred under a nitrogen atmosphere to a dried Schlenk vessel. The loss on ignition after conditioning was 1.21% by weight.

### b) Production of the catalyst

The metallocene dimethylsilanediylbis(2-methylindenyl)zirconium dichloride was freed of the meso isomer by fractional crystallization to below the NMR-spectroscopic detection limit of 5%. 92.6 mg (194.3 µmol) of the remaining rac isomer were dissolved at room temperature in 8.6 ml (40.9 mmol of Al) of 30% strength by weight methylaluminoxane solution in toluene (Albemarle Corporation, Baton Rouge, Louisiana, USA). The solution was diluted with 16.1 ml of toluene and stirred at 25°C for 1 hour while being protected from light. This solution was added a little at a time to 10.4 g of the conditioned pyrogenic silica from Example 1a) while stirring and the mixture was stirred for another 10 minutes after the addition was complete. The mixture was subsequently dried at 40°C and 10⁻² mbar for 4 hours. This gave 12.97 g of a pink free-flowing powder whose proportion of volatile constituents was determined as 2.47% by weight.

### c) Polymerization

A dry 5 1 reactor which had been flushed firstly with nitrogen and subsequently with propene was charged with 3 1 of liquid propene. In addition, 1.5 standard liters of hydrogen were metered in. 4 ml of a 20% strength by weight solution of triethylaluminum in a high-boiling dearomatized hydrocarbon mixture from Witco were then added and the mixture was stirred at 30°C for 15 minutes. A suspension of 250 mg of the catalyst solid prepared in Example 1 b) in 10 ml of a high-boiling dearomatized hydrocarbon mixture was subsequently introduced into the reactor, the contents of the reactor were heated to the polymerization temperature of 65°C and the polymerization system was maintained at 65°C for 1 hour. The polymerization was stopped by venting and the polymer obtained was dried under reduced pressure. This gave a yield of 720 g of polypropylene, corresponding to a productivity of 2 880 g of polypropylene/g of catalyst solid.

100 g of the polymer powder were fractionated using an analytical sieving machine Haver EML 200 digital T from Haver & Boecker, Oelde, Germany. 10 mg were isolated below the 100 µm screen, melted on a hot stage and examined by means of an optical microscope. No unmelted objects larger than 5 µm in diameter were observed over an area of 300 µm x 1 000 µm.

### Comparative example A

### a) Pretreatment of the support

The support material used was Sylopol 948, a silica gel from Grace. The silica gel was calcined at 700°C for 8 hours.

### b) Production of the catalyst

Example 1b) was repeated, but 89.2 mg (187.1 µmol) of the metallocene dissolved in 8.3 ml of the 4.75 M MAO solution (corresponding to 39.5 mmol of Al) and diluted with 11.7 ml of toluene were combined with 10.0 g of the support material from comparative example A a). The proportion of volatile constituents was 1.97% by weight.

### c) Polymerization

Example 1c) was repeated, but 250 mg of the catalyst solid produced in comparative example A b) were used. This gave 540 g of polypropylene, corresponding to a productivity of 2 160 g of polypropylene/g of catalyst solid.

100 g of the polymer powder were sieved and examined as in example 1c). An average of 20 unmelted particles having a diameter in the range from 5 to 50 µm were observed over an area of 300 µm x 1 000 µm.

### Example 2

### a) Pretreatment of the support

Use was made of a pyrogenic silica which had been agglomerated to secondary particles by Degussa AG in a spray drying process without spray drying auxiliary. The primary particles had a mean particle diameter d₅₀ of 7 nm. The intended size distribution was set by sieving to d₁₀/d₅₀/d₉₀ = 19/46/75 µm. The specific surface area was 380 m²/g.

100 g of the material were passivated as in example 1a). The loss on ignition after conditioning was 2.72% by weight.

### b) Production of the catalyst

The metallocene dimethylsilanediylbis(2-methyl-4,5-benzindenyl)zirconium dichloride was freed of the meso isomer by fractional crystallization to below the NMR-spectroscopic detection limit of 5%. 114.6 mg (198.7 µmol) of the remaining rac isomer were dissolved at room temperature in 8.8 ml (41.9 mmol of Al) of a 30% strength by weight methylaluminoxane solution in toluene (Albemarle). The solution was diluted with 19.2 ml of toluene and stirred at 25°C for 1 hour while being protected from light. This solution was added a little at a time to 10.6 g of the pyrogenic silica from example 2a) while stirring and the mixture was worked up as in example 1b). The proportion of volatile constituents was 1.04% by weight.

### c) Polymerization

The polymerization of example 1c) was repeated using 310 mg of the catalyst from example 2b). This gave a yield of 720 g, corresponding to a catalyst productivity of 2 320 g of polypropylene/g of catalyst solid.

100 g of the polymer powder were sieved and examined as in example 1c). No unmelted objects larger than 5 µm in diameter were observed over an area of 300 µm x 1 000 µm.

### Comparative example B

### a) Pretreatment of the support

The support material from comparative example A a) was used.

### b) Production of the catalyst

Example 2b) was repeated, but 109.8 mg (190.4 µmol) of the metallocene dissolved in 8.5 ml of the 4.75 M MAO solution (corresponding to 40.5 mmol of Al) and diluted with 11.9 ml of toluene were combined with 10.2 g of the support material from comparative example A a). The proportion of volatile constituents was 1.4% by weight.

### c) Polymerization

Example 1c) was repeated, but 310 mg of the catalyst solid prepared in comparative example B b) were used. This gave 640 g of polypropylene, corresponding to a productivity of 2 060 g of polypropylene/g of catalyst solid.

100 g of the polymer powder were sieved and examined as in example 1c). An average of 25 unmelted particles having a diameter in the range from 5 to 50 µm were observed over an area of 300 µm x 1 000 µm.

### Example 3

### a) Pretreatment of the support

5 000 g of a pyrogenic silica from Degussa AG spray-dried following the method described in German patent application 101 63 179.0 and having a d₁₀/d₅₀/d₉₀ = 30/53/78 µm, a specific surface area of 380 m²/g, a pore volume of 1.55 ml/g and a mean particle diameter of the primary particles d₅₀ of 7 nm was calcined at 480°C and handled under nitrogen.

The loss on ignition was 1.3% by weight.

### b) Production of the catalyst

4 000 g of the support material from example 3a) were suspended in 32 1 of toluene at room temperature and 3.1 I (2.9 kg) of a 30% strength by weight methylaluminoxane solution in toluene (Albemarle) were slowly added. The reaction mixture was stirred at room temperature for one hour and subsequently filtered. In parallel thereto, 93 g of rac-dimethylsilanediylbis(2-methyl-4,5-benzindenyl)zirconium dichloride were admixed with 7.1 I (6.6 kg) of the 30% strength by weight methylaluminoxane solution in toluene and 17 I of toluene and stirred at room temperature for one hour. The MAO/metallocene solution was slowly added to the suspension of the support material. The solvent was subsequently slowly separated off by filtration over a period of two hours and the solid was washed twice with 18 l each time of heptane. The catalyst was finally suspended in isododecane.

The support material was laden with 0.2 g of metallocene/100 g of supported catalyst and 14 g of MAO/100 g of supported catalyst.

### c) Polymerization

A continuous propylene homopolymerization was carried out in a vertically mixed 800 I gas-phase reactor using the catalyst prepared in example 3b). The reactor contained a bed of finely divided polypropylene powder and was operated at a constant output of about 100 kg/h. The reactor pressure was 24 bar and the reactor temperature was 64°C. 300 mmol/h of triisotiutylaluminum were added as a 1 M solution in heptane. A polymer powder having a bulk density of 480 g/l, a mean particle size of 1.2 mm and 2% by weight of particles larger than 2 mm in diameter was obtained. The catalyst productivity was 4 500 g of PP/g of catalyst solid.

The melt filtration test carried out on the polypropylene obtained gave a pressure increase of 10 bar/kg of polypropylene.

### Comparative example C

### a) Pretreatment of the support

The support material used was Sylopol 948, a silica gel from Grace. The silica gel was dried for 8 hours at 130°C under reduced pressure. The loss on ignition was 3.0% by weight.

### b) Production of the catalyst

Example 3b) was repeated using the support material of comparative example C a), but, in the first preparation step, 20 1 of toluene were used for suspending the support material and 4.2 (3.9 kg) of the 30% strength by weight methylaluminoxane solution in toluene were added and, in the second preparation step, 138 g of rac-dimethylsilanediylbis(2-methyl-4,5-benzindenyl)zirconium dichloride and 7.8 l (7.2 kg) of the 30% strength by weight methylaluminoxane solution in toluene were used.

The support material was laden with 0.3 g of metallocene/100 g of supported catalyst and 16 g of MAO/100 g of supported catalyst.

### c) Polymerization

Example 3c) was repeated using the catalyst from comparative example C a). This gave a polymer powder having a bulk density of 470 g/l, a mean particle size of 1.4 mm and 3.2% by weight of particles larger than 2 mm in diameter. The catalyst productivity was 5 500 g of PP/g of catalyst solid.

The melt filtration test carried out on the polypropylene obtained gave a pressure increase of 160 bar/kg of polypropylene.

## Claims

1. A catalyst solid for olefin polymerization, comprising
A) support particles having a mean particle diameter d₅₀ of from 5 to 200 µm and a specific surface area of from 30 to 1 000 m²/g and obtainable by agglomeration of primary particles of a pyrogenic silica having a mean particle diameter d₅₀ of from 1 to 50 nm, and
B) at least one organic transition metal compound.

2. A catalyst solid as claimed in claim 1 which further comprises
C) at least one cation-forming compound.

3. A catalyst solid as claimed in claim 2, wherein the cation-forming compound C is an open-chain or cyclic aluminoxane compound of the formula (V) or (VI), 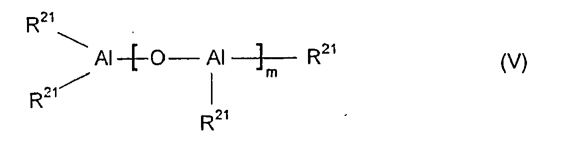 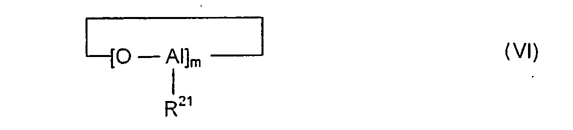 where
R²¹ is a C₁-C₄-alkyl group and m is an integer from 5 to 30.

4. A catalyst solid as claimed in any of claims 1 to 3 which further comprises, as additional component D), one or more metal compounds of the formula (IX),
M³ (R²²)ᵣ (R²³)ₛ (R²⁴)ₜ (IX)
where
M³ is an alkali metal, an alkaline earth metal or a metal of group 13 of the Periodic Table,
R²² is hydrogen, C₁-C₁₀-alkyl, C₆-C₁₅-aryl, alkylaryl or arylalkyl each having from 1 to 10 carbon atoms in the alkyl part and from 6 to 20 carbon atoms in the aryl part,
R²³ and R²⁴ are each hydrogen, halogen, C₁-C₁₀-alkyl, C₆-C₁₅-aryl, alkylaryl, arylalkyl or alkoxy each having from 1 to 10 carbon atoms in the alkyl radical and from 6 to 20 carbon atoms in the aryl radical,
r is an integer from 1 to 3
and
s and t are integers from 0 to 2, where the sum r+s+t corresponds to the valence of M³.

5. A catalyst solid as claimed in any of claims 1 to 4, obtainable by bringing into contact
A) the support particles having a mean particle diameter d₅₀ of from 5 to 200 µm and a specific surface area of from 30 to 1 000 m²/g, and obtainable by agglomeration of primary particles of a pyrogenic silica having a mean particle diameter d₅₀ of from 1 to 50 nm,
B) the organic transition metal compound or compounds,
and optionally
C) the cation-forming compound or compounds and/or
D) the metal compound or compounds of the formula (IX).

6. A prepolymerized catalyst solid comprising a catalyst solid as claimed in any of claims 1 to 5 and linear C₂-C₁₀-1-alkenes polymerized onto it in a mass ratio of from 1:0.1 to 1:200.

7. A catalyst system comprising a catalyst solid as claimed in any of claims 1 to 6 and a metal compound D') of the formula (IX) defined in claim 4, with the metal compound D') and the metal compounds D) being able to be identical or different.

8. The use of a catalyst solid as claimed in any of claims 1 to 6 for the polymerization or copolymerization of olefins.

9. A process for preparing polyolefins by polymerization or copolymerization of olefins in the presence of a catalyst solid as claimed in any of claims 1 to 6.

10. A process as claimed in claim 9, wherein propylene or a monomer mixture of propylene, ethylene and/or C₂-C₁₂-1-alkenes which contains at least 50 mol% of propylene is used as monomer(s) in the polymerization.

## Patentansprüche

1. Katalysatorfeststoff zur Olefinpolymerisation, enthaltend
A) Trägerpartikel mit einem mittleren Teilchendurchmesser d₅₀ von 5 bis 200 µm und einer spezifischen Oberfläche von 30 bis 1000 m²/g, erhältlich durch Agglomeration von Primärpartikeln aus einer pyrogenen Kieselsäure mit einem mittleren Teilchendurchmesser d₅₀ von 1 bis 50 nm, und
B) mindestens eine Organoübergangsmetallverbindung.

2. Katalysatorfeststoff nach Anspruch 1, enthaltend zusätzlich
C) mindestens eine kationenbildende Verbindung.

3. Katalysatorfeststoff nach Anspruch 2, wobei die kationenbildende Verbindung C) eine offenkettige oder cyclische Aluminoxanverbindung der allgemeinen Formel (V) oder (VI) ist, 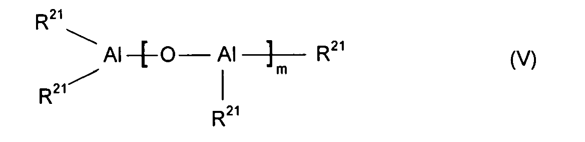 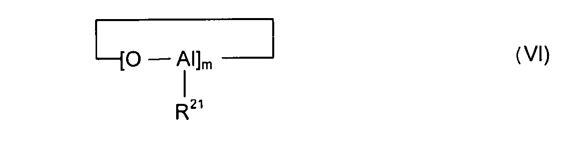 in denen
R²¹ eine C₁-C₄-Alkylgruppe bedeutet und m für eine ganze Zahl von 5 bis 30 steht.

4. Katalysatorfeststoff nach den Ansprüchen 1 bis 3, wobei der Katalysatorfeststoff zusätzlich als weitere Komponente D) eine oder mehrere Metallverbindungen der allgemeinen Formel (IX),
M³(R²²)ᵣ (R²³)ₛ (R²⁴)ₜ (IX)
in der
M³ ein Alkali-, ein Erdalkalimetall oder ein Metall der 13. Gruppe des Periodensystems bedeutet,
R²² Wasserstoff, C₁-C₁₀-Alkyl, C₆-C₁₅-Aryl, Alkylaryl oder Arylalkyl mit jeweils 1 bis 10 C-Atomen im Alkylrest und 6 bis 20 C-Atomen im Arylrest,
R²³ und R²⁴ Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
r eine ganze Zahl von 1 bis 3
und
s und t ganze Zahlen von 0 bis 2 bedeuten, wobei die Summe r+s+t der Wertigkeit von M³ entspricht,
enthält.

5. Katalysatorfeststoff nach den Ansprüchen 1 bis 4, erhältlich durch in Kontakt bringen
A) der Trägerpartikel mit einem mittleren Teilchendurchmesser d₅₀ von 5 bis 200 µm und einer spezifischen Oberfläche von 30 bis 1000 m²/g, erhältlich durch Agglomeration von Primärpartikeln aus einer pyrogenen Kieselsäure mit einem mittleren Teilchendurchmesser d₅₀ von 1 bis 50 nm,
B) der Organoübergangsmetallverbindung oder -verbindungen, und optional
C) der kationenbildenden Verbindung oder -verbindungen und/oder
D) der Metallverbindung oder -verbindungen der allgemeinen Formel (IX).

6. Vorpolymerisierter Katalysatorfeststoff, enthaltend einen Katalysatorfeststoff nach den Ansprüchen 1 bis 5 und hinzupolymerisierte lineare C₂-C₁₀-1-Alkene im Massenverhältnis von 1:0,1 bis 1:200.

7. Katalysatorsystem, enthaltend einen Katalysatorfeststoff nach den Ansprüchen 1 bis 6 und eine Metallverbindung D') der in Anspruch 4 definierten allgemeinen Formel (IX), wobei die Metallverbindung D') und die Metallverbindungen D) gleich oder verschieden sein können.

8. Verwendung eines Katalysatorfeststoffs nach den Ansprüchen 1 bis 6 zur Polymerisation oder Copolymerisation von Olefinen.

9. Verfahren zur Herstellung von Polyolefinen durch Polymerisation oder Copolymerisation von Olefinen in Gegenwart eines Katalysatorfeststoffs nach den Ansprüchen 1 bis 6.

10. Verfahren nach Anspruch 9, wobei man bei der Polymerisation als Monomer(e) Propylen oder eine Monomermischung aus Propylen, Ethylen und/oder C₂-C₁₂-1-Alkenen, die mindestens 50 mol-% Propylen aufweist, einsetzt.

## Revendications

1. Solide catalytique pour polymérisation d'oléfines, comprenant
A) des particules support ayant un diamètre de particule moyen d₅₀ entre 5 et 200µm et une surface active spécifique entre 30 et 1000 m²/g et que l'on peut obtenir par agglomération de particules primaires d'une silice pyrogène ayant un diamètre de particules moyen d₅₀ entre 1 et 50 nm, et
B) au moins un composé métal de transition organique.

2. Solide catalytique selon la revendication 1 qui comprend en outre
C) au moins un composé formant un cation.

3. Solide catalytique selon la revendication 2, dans lequel le composé formant un cation C est un composé aluminoxane à chaîne ouverte ou cyclique de formule (V) ou (VI), 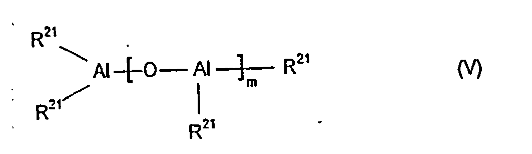 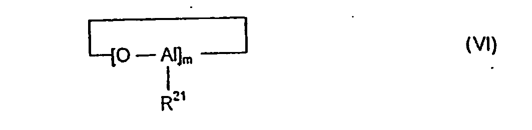 où
R²¹ est un groupe alkyle en C₁-C₄ et m est un nombre entier de 5 à 30.

4. Solide catalytique selon l'une des revendications 1 à 3 qui comprend en outre, en tant que composant additionnel D), un ou plusieurs composés métalliques de formule (IX),
M³ (R²²)ᵣ (R²³)ₛ (R²⁴)ₜ (IX)
où
M³ est un métal alcalin, un métal alcalino-terreux ou un métal du groupe 13 du tableau périodique,
R²² est un hydrogène, un alkyle en C₁-C₁₀, un aryle en C₆-C₁₅, un alkylaryle ou un arylalkyle ayant chacun de 1 à 10 atomes de carbone dans la partie alkyle et de 6 à 20 atomes de carbone dans la partie aryle,
R²³ et R²⁴ sont chacun un hydrogène, un halogène, un alkyle en C₁-C₁₀ un aryle en C₆-C₁₅, un alkylaryle, un arylalkyle ou un alcoxy chacun ayant de 1 à 10 atomes de carbone dans le radical alkyle et de 6 à 20 atomes de carbone dans le radical aryle,
r est un nombre entier de 1 à 3
et
s et t sont des nombres entiers de 0 à 2, où la somme r+s+t correspond à la valence de M³.

5. Solide catalytique selon l'une quelconque des revendications 1 à 4, que l'on peut obtenir en mettant en contact
A) les particules support ayant un diamètre de particule moyen d₅₀ entre 5 et 200 µm et une surface active spécifique entre 30 et 1000 m²/g et que l'on peut obtenir par agglomération de particules primaires d'une silice pyrogène ayant un diamètre de particules moyen d₅₀ entre 1 et 50 nm, et
B) le ou les composé(s) métal de transition organique et de façon optionnelle
C) les ou les composés formant un cation et/ou
D) le ou les composés métallique(s) de formule (IX).

6. Solide catalytique pré-polymérisé comprenant un solide catalytique selon l'une quelconque des revendications 1 à 5 et des 1-alcènes linéaires en C₂-C₁₀ polymérisés sur lui dans un rapport de masse de 1 :0,1 à 1 :200.

7. Système catalytique comprenant un solide catalytique selon l'une quelconque des revendications 1 à 6 et un composé métallique D') de formule (IX) définie dans la revendication 4, avec le composé métallique D') et les composés métalliques D) pouvant être identiques ou différents.

8. Utilisation d'un solide catalytique selon l'une quelconque des revendications 1 à 6 pour la polymérisation ou la copolymérisation d'oléfines.

9. Procédé de préparation de polyoléfines par polymérisation ou copolymérisation d'oléfines en présence d'un solide catalytique selon l'une quelconque des revendications 1 à 6.

10. Procédé selon la revendication 9, dans lequel le propylène ou un mélange monomère de propylène, d'éthylène et/ou de 1-alcène en C₂-C₁₂ qui contient au moins 50 moles% de propylène est utilisé en tant que monomère(s) dans la polymérisation.
